# EUROPÄISCHE PATENTSCHRIFT

(11) **EP 2 209 045 B1**
(45) Veröffentlichungstag und Bekanntmachung des Hinweises auf die Patenterteilung: **06.10.2010**
(21) Anmeldenummer: 10150502.2
(22) Anmeldetag: 12.01.2010
(51) Int. Cl.: G03B 21/58

(54) **Transportabler faltbarer Lichtgestalter für photographische und filmische Aufnahmen**
Transportable collapsible light director for photographic and cinematographic imaging
Formeur de lumière portable et pliable pour des enregistrements photographiques ou cinématographiques

(30) Priorität: 16.01.2009 DE 202009000682 U
(43) Veröffentlichungstag der Anmeldung: 21.07.2010
(73) Patentinhaber: Geller, Wolfgang-Peter, 21476 Garlstorf (DE)
(72) Erfinder: Geller, Wolfgang-Peter, 21476 Garlstorf (DE)
(74) Vertreter: Raffay & Fleck

(56) Entgegenhaltungen:
- GB-A- 1 562 282
- US-A- 4 312 371
- US-A- 4 951 333
- US-A- 5 024 262

## Beschreibung

Die Erfindung betrifft einen transportablen faltbaren Lichtgestalter für photographische und filmische Aufnahmen mit den Merkmalen des Oberbegriffs des Anspruchs 1.

Es ist bekannt, dass für photographische und filmische Aufnahmen die Lichtverhältnisse zum Erzielen optimaler Aufnahmeergebnisse beeinflusst werden. Dies gilt nicht nur im Studio, sondern auch für Außenaufnahmen. Neben einer Ausleuchtung des Aufnahmesets mit Kunstlicht (Lampen/Blitz) werden hierfür auch Reflektoren eingesetzt, die entweder das Kunstlicht oder aber auch natürliches Sonnenlicht reflektieren, um dieses gezielt auf auszuleuchtende Bereiche des Aufnahmeobjektes zu lenken. Gleichsam ist es auch bekannt, die Lichtverhältnisse am Aufnahmeset durch Diffusoren oder Abschwächer zu beeinflussen, die in den Lichtgang des natürlichen oder aber auch künstlichen Lichtes gezielt eingebracht werden.

Insoweit ist mit einem "Lichtgestalter" im Sinne dieser Erfindung eine Vorrichtung gemeint, die zur gezielten Veränderung des Lichtganges zur Beeinflussung der Ausleuchtung eines Aufnahmesets eingesetzt wird, sei es als Reflektor, sei es als Diffusor oder zur gezielten Abschwächung des Lichtes oder gar zur Erzielung von Kombinationen dieser Effekte.

Insbesondere für den mobilen Einsatz bei Außenaufnahmen, aber auch für sonstige Einsatzformen ist vor mehr als 30 Jahren ein sehr einfach konstruierter, jedoch wirkungsvoller transportabler faltbarer Lichtgestalter entwickelt worden, wie er in der GB 1562282 beschrieben ist. Bei diesem Element ist ein kreisförmiger geschlossener Reif, der auch als Rahmen bezeichnet werden kann, aus einem flexiblen Material, insbesondere Federstahl, mit einer an die Dimensionen des Reifs angepassten, tuchartigen Bespannung versehen, die an ihrem äußeren Rand eine Art Tunnel aufweist, durch die der Reif geführt ist. Der Reif aus dem federelastischen Material ist insoweit verformbar, als dass der Lichtgestalter durch Verdrehen des Reifs und Übereinanderfalten in seiner Größe verkleinert und z.B. in einer Transporttasche zurückgehalten werden kann.

Derartige Lichtgestalter werden auch heute noch vielfach eingesetzt, sie bilden eine einfache und kostengünstige Alternative zu an sich stabileren aber auch aufwendigeren Lichtgestaltern, die auf mit festen Gestängen gebildeten, stoffbespannten Rahmen basieren.

Allerdings besteht bei den bekannten Lichtgestaltern der oben beschriebenen Art häufig das Problem, dass bei diesen die Bespannung auch im ausgefalteten Zustand nicht ausreichend straff ist, häufig sogar Falten wirft, was z.B. bei einem Einsatz als Reflektor eine definierte Beeinflussung des Lichtes und damit Ausleuchtung des Aufnahmesets erschwert. Dieser Mangel rührt daher, dass oftmals die durch den Reif aus Federstahl auf die Bespannung ausgeübte Zugkraft nicht genügt, der Bespannung eine ausreichende Straffung zu verschaffen. Dieses Problem wird insbesondere verstärkt bei zunehmenden Alter des Lichtgestalters, da einerseits die Spannkraft des Federstahls nachlässt, andererseits die textile Bespannung gedehnt wird und damit an Straffheit verliert.

In der WO 2004/021320 A1 ist ein Werbeaufsteller bzw. ein Aufsteller zum Aufbringen anderer als Werbeinformationen offenbart, der mehrere miteinander verbundene und übereinanderzulegende Flächenelemente aufweist, die jeweils eine durch einen flexiblen Reif gespannte und in einer Aufstellerposition straff gehaltene, von einer Kreisform abweichende Bespannung umfassen. Zum platzsparenden Transport dieses Aufstellers können die miteinander verbundenen Flächenelemente flach übereinander gelegt und anschließend durch Verwinden der Reifen gefaltet werden. Dieser Aufsteller kann zwar als Bespannungen zur Lichtbeeinflussung enthaltend angesehen werden, er ist jedoch nicht zum Einsatz am Set von Photo- oder Filmaufnahmen geeignet, insbesondere nicht zum handgehaltenen Einsatz. Hier stört die im aufgefalteten Zustand des Aufstellers dreidimensionale Erstreckung, die ein Handhaben am Set nicht praktikabel macht. Der Aufsteller ist in der WO 2004/021320 im Übrigen auch für einen gänzlich anderen Einsatz beschrieben.

Als weitere Elemente, die umgeben und in Position gehalten von einem flexiblen Reif eine tuchartige Bespannung enthalten, sind im Stand der Technik in der US 5,024,262 ein Sonneschutz für Kraftfahrzeug-Windschutzscheiben und in der US 4,951,333 ein Strand-Liegetuch beschrieben.

Es ist vor diesem Hintergrund Aufgabe der Erfindung, einen für den Einsatz für photographische und filmische Aufnahmen verwendbaren transportablen, faltbaren Lichtgestalter der eingangs genannten Art dahingehend zu verbessern, als dass er im aufgefalteten Zustand die Bespannung zuverlässiger straff hält und einfach handhabbar ist.

Diese Aufgabe wird gelöst durch einen transportablen faltbaren Lichtgestalter mit den Merkmalen des Patentanspruchs 1, wobei insbesondere die im kennzeichnenden Teil aufgeführten Merkmale zur Lösung der Aufgabe beisteuern. Vorteilhafte Weiterbildungen und Ausgestaltungen eines erfindungsgemäßen Lichtgestalters sind in den abhängigen Unteransprüchen 2 bis 9 angegeben.

Bei dem vorbekannten Lichtgestalter für photographische und filmische Aufnahmen gemäß der GB 1 562 282 wurde erkannt, dass aufgrund einer gleichmäßigen Anpassung der Dimensionierung des Reifs bzw. Rahmens und der von diesem gehaltenen Bespannung sich einfacher Defizite hinsichtlich einer zuverlässigen Straffung eines Bespannungsmaterials ergeben können. Lässt dort die Federkraft des Reifs bzw. Rahmens nach oder erschlafft das Material der Bespannung und dehnt sich aus, so kann der Rahmen beim Auffalten des Lichtgestalters die Bespannung nicht mehr in ausreichender Weise straffen, es kommt zum Faltenwurf.

Hier wird gegenüber dieser Gestaltung zunächst mit einem sehr wirksamen Mittel angesetzt, indem gezielt jedenfalls in einer Richtung die Bespannung gegenüber dem unbespannten, vollständig ausgebreiteten Rahmen mit einem Untermaß gebildet wird. Dieses Untermaß ist jedenfalls größer als ein mögliches Untermaß in einer zweiten Richtung, so dass sich eine unsymmetrische Verteilung der Spannkräfte beim Auffalten des Lichtgestalters ergibt. Aufgrund dieses Untermaßes wird in jedem Fall eine klare Spannkraft durch den an dieser Stelle weiterhin nach außen in seine ausgebreitete Stellung drängenden Rahmen auf die Bespannung ausgeübt, welches Zugkraft letztlich zu einer Straffung der Bespannung insgesamt führt. Selbst bei Nachlassen der Spannkraft des Rahmens bzw. bei einer Änderung des Maßes der Bespannung aufgrund von altersbedingter Dehnung, bietet dieses Untermaß zusätzliche und ausreichende Reserven, um eine zuverlässige und glatte Straffung der Bespannung im aufgefalteten Zustand des Lichtgestalters zu gewährleisten.

Mit der Erfindung wird damit bewusst die Vorgabe des Standes der Technik gemäß der GB 1562282, nach der bis heute derartige Lichtgestalter für den Einsatz bei photographischen und filmischen Aufnahmen gebildet sind, verlassen, wonach die Bespannung in ihrer Form exakt der Form des Reifes nachgebildet ist, in dem Beispiel der GB 1562282 entsprechend eine kreisrunde Bespannung mit kreisrunder Aufnahme für einen ebenfalls kreisrunden Reif.

Erfindungsgemäß ist der Rahmen (der auch als Reif bezeichnet werden kann) ferner in vollständig ausgebreiteter Stellung und ohne die Bespannung kreisrund, die Bespannung weist eine von der Kreisform abweichende Form auf mit einer den Durchmesser des unbespannten Rahmens unterschreitenden Breite in einer kürzeren Erstreckungsrichtung. Dies kann insbesondere vorzugsweise durch eine ovale Ausbildung oder ellipsenförmige Ausbildung der Bespannung erfolgen, wobei die Breite bzw. der Durchmesser des Ovals bzw. der Ellipse entlang der Schmalseite kleiner gewählt ist mit einem deutlichen Untermaß zu dem Durchmesser des Kreises des ausgebreiteten unbespannten Rahmens.

Schließlich ist erfindungsgemäß an dem Rahmen wenigstens ein Handgriff, vorzugsweise sind zwei Handgriffe, angeordnet. Mit solchen lässt sich der aufgefaltete Lichtgestalter halten und positionieren.

Darüber hinaus können die Handgriffe, insbesondere wenn sie wie in Anspruch 2 angegeben positioniert sind, eine zusätzliche stabilisierende Wirkung entfalten. Wenn sie nämlich jenseits der Richtung, entlang derer die Bespannung mit einem Untermaß gegenüber der Breite des unbespannten, vollständig entfalteten Rahmens an dieser Position versehen ist, angeordnet werden (z.B. an einander gegenüberliegenden Enden der längeren Achse des Ovals einer ovalen Bespannung), so können derartige Handgriffe zusätzlich die durch die unterschiedliche Dimensionierung zwischen Rahmen und Bespannung entstehende Zugwirkung und Straffung unterstützen, indem sie ein zusätzliches Kraftmoment auf den Rahmen ausüben, der an diesen Stellen durch die Handgriffe versteift ist.

Um zu verhindern, dass der Lichtgestalter in vollständig aufgefaltetem Zustand sich aus der gewünschten ebenen Form verformt und z.B. Verwerfungen in Form einer Sattelfläche aufweist, ist es von Vorteil, wenn die Bespannung wie in Anspruch 3 angegeben ausgebildet ist. So kann der Rahmen eine durch das Untermaß in der ersten Richtung ihm aufgezwungene Verformung ausgleichen, indem er sich in die Richtung des Übermaßes der Bespannung hinein erstreckt und dieses Übermaß dann straffend ausfüllt.

Grundsätzlich kann der Rahmen aus jedem beliebigen Material mit ausreichender Elastizität und Verformbarkeit gebildet sein, wie z.B. einem geeigneten Kunststoff. Aufgrund der Haltbarkeit und guten Aufrechterhaltung der Federkraft wird jedoch Federstahl als Material bevorzugt. Dieses kann einen kreisförmigen Durchmesser aufweisen, aber auch als Stahlband gebildet sein.

Die Bespannung kann auch bei einem Lichtgestalter gemäß der Erfindung in der grundsätzlich üblichen Weise mit dem Rahmen verbunden sein, z.B. über entlang des Umfanges der Bespannung ausgebildete Schlaufen oder Tunnel, durch die der Rahmen geführt ist.

Die Bespannung des Lichtgestalters kann in üblicher Weise durch ein Textil, insbesondere ein gewebtes oder gestricktes Textil gebildet sein. Sie kann aber aus durch eine Folie oder dergleichen bestehen. Ferner kann die Bespannung mit Vorteil aus einem elastischen Material bestehen, so dass auch aufgrund der eigenen Elastizität eine Straffung der Bespannung bei ausgefaltetem Lichtgestalter unterstützt wird.

Soll der Lichtgestalter als Reflektor dienen, so ist mit Vorteil die Bespannung zum Reflektieren von Licht eingerichtet. Dies kann beispielsweise durch das Material der Bespannung selbst gewährleistet sein oder aber durch eine Beschichtung oder Bedruckung, z.B. einer Bedampfung mit Metall oder dgl.

In ähnlicher Weise kann, sofern der Lichtgestalter als Diffusor oder zum Abschwächen von Licht eingesetzt werden soll die Bespannung zum Abschwächen und/oder Streuen von Licht eingerichtet sein.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: in getrennt nebeneinander angeordneten Darstellung die beiden Elemen- te Rahmen und Bespannung eines erfindungsgemäßen Lichtgestalters;
- Fig. 2: einen erfindungsgemäßen Lichtgestalter; und
- Fig. 3: in überdeckter Darstellung einen erfindungsgemäßen Lichtgestalter und im Vergleich dazu einen vollständig aufgefalteten, in Ruhestellung be- findlichen Rahmen.

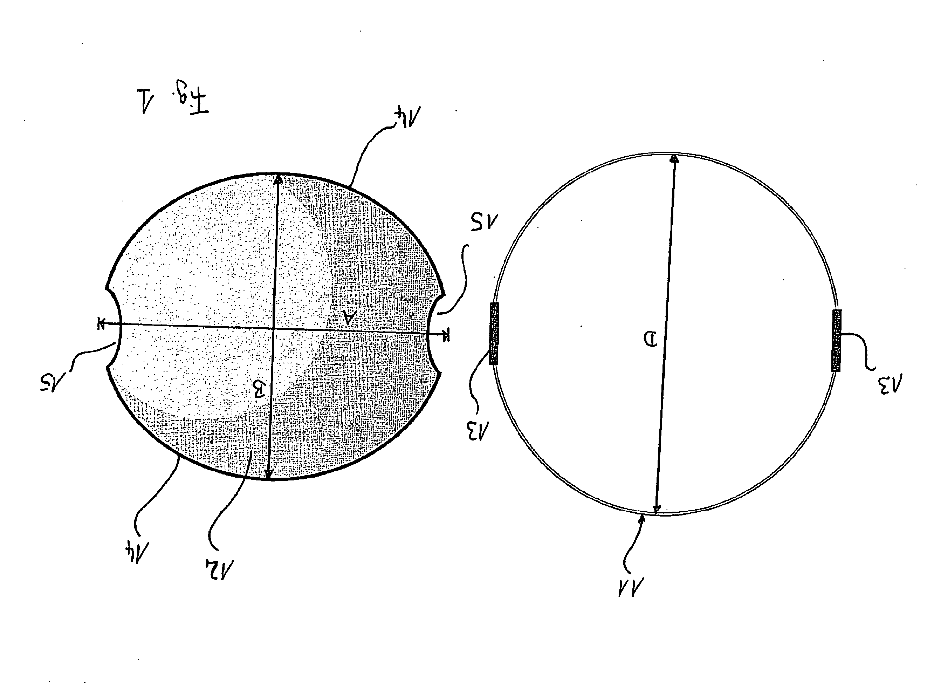

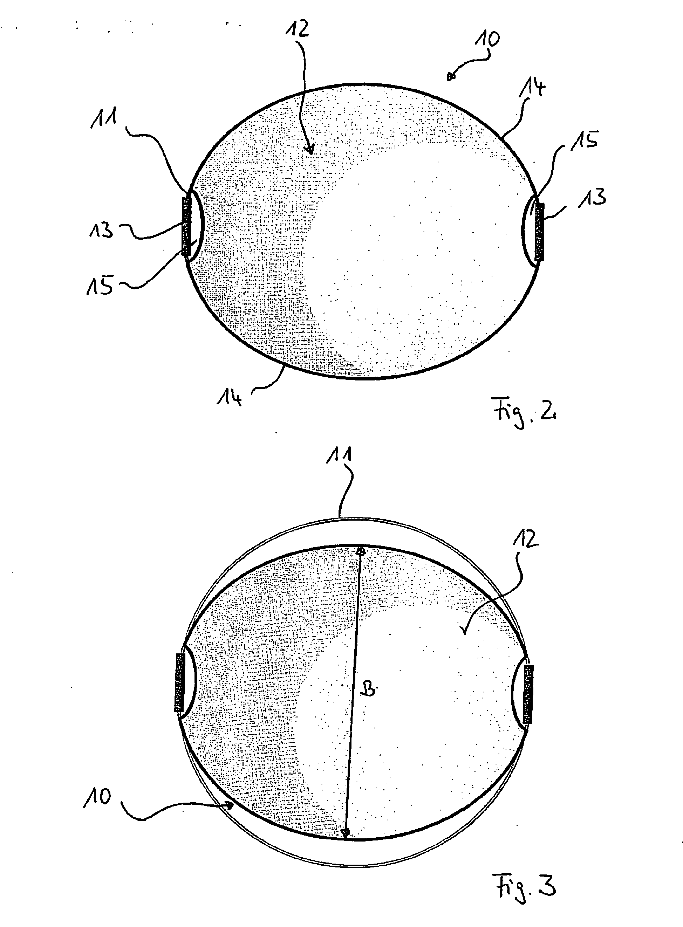

In Fig. 1 sind getrennt voneinander die wesentlichen Komponenten eines erfindungsgemäßen Lichtgestalters 10 (vgl. Fig. 2) gezeigt, nämlich ein Rahmen 11 sowie eine Bespannung 12.

Der Rahmen 11 ist geschlossen gebildet und besteht aus einem federelastischen Material, hier Federstahl. Er ist in der Fig. 1 in einer entspannten und maximal entfalteten Position dargestellt, in der er im Wesentlichen eine Kreisform einnimmt mit dem Durchmesser D. An zwei diametral einander gegenüberliegenden Positionen sind an dem Rahmen 11 Handgriffe 13 angeordnet, die hier die Form eines geraden Abschnittes einnehmen, die das Material des Rahmens umgreifen. Diese Handgriffe 13 können beispielsweise aus Kunststoff, aus Holz, aus Metall oder einem anderen geeigneten Material gebildet sein. Sie umgreifen den Rahmen 11 in einer solchen Weise, dass sie diesen in dem Bereich der Überdeckung versteifen.

Die Bespannung 12, die bevorzugt aus einem gewebten oder gestrickten Textil, das z.B. durch die Wahl des Garns eine Elastizität aufweist, oder aber auch aus einer elastischen Folie besteht ist abweichend von der Form des Rahmens in vollständig ausgefaltetem Zustand nicht kreisrund, sondern oval gebildet. Dabei entspricht die Breite A der Bespannung 12 in der breiteren Erstreckungsrichtung im Wesentlichen dem Durchmesser D des Rahmens 11, übersteigt diesen allerdings um ein gewisses Maß. Die Breite B in der kürzeren Erstreckungsrichtung der Bespannung 12 ist mit einem deutlichen Untermaß gegenüber dem Durchmesser D gebildet. An ihrem Rand 14 ist in der Bespannung 12 (hier nicht näher dargestellt) z.B. durch Umfalzen und Vernähen ein Tunnel gebildet, durch den der Rahmen 11 geführt, und über welchen der Rahmen 11 mit der Bespannung 12 verbunden werden kann. Unterbrochen ist der Tunnel lediglich an zwei einander gegenüberliegenden Seiten entlang der Breite A, wo taschenartige Ausbuchtungen 15 in das Material der Bespannung 12 eingebracht sind, zur Aufnahme der Handgriffe, wie nachstehend anhand von Fig. 2 erläutert.

In Fig. 2 ist der Lichtgestalter 10 in zusammengefügtem und vollständig ausgefaltetem Zustand dargestellt. Der Rahmen 11 ist so in die entlang des Randes 14 der Bespannung 12 ausgebildeten Taschen eingelegt, dass die Handgriffe 13 in den taschenartigen Ausbuchtungen 15 gelegen sind.

Insbesondere im Vergleich mit der Darstellung aus Fig. 3, in der übereinander gelegt dargestellt sind der Lichtgestalter 10 mit seiner aufgrund der mit einem Untermaß gebildeten Gestaltung der Bespannung 12 in ein Oval gezwungenen Form und der vollständig entspannte Rahmen 11 ohne Bespannung, wird deutlich, dass auch bei vollständig aufgefalteten Lichtgestalter 10 der Rahmen 11 nach wie vor eine in Richtung der Breite B nach außen wirkende Kraft auf die Bespannung 12 ausübt, die sich aufgrund der Form des geschlossenen Rahmens 11 und der über den gesamten Randbereich verlaufenden Befestigung der Bespannung 12 an dem Rahmen 11 auch auf die weiteren Bereiche der Bespannung 12 auswirkt und diese zuverlässig strafft. Dabei sind die hier gezeigten Darstellungen rein schematisch und nicht maßstabsgerecht, sie zeigen insbesondere eine überhöhte Darstellung des Untermaßes der Bespannung 12 gegenüber dem Durchmesser des Rahmens 11. In der Praxis wird dieses Untermaß so gewählt werden, dass zwar eine zuverlässige, die Bespannung 12 straffende Kraft durch den Rahmen 11 auf die Bespannung 12 ausgeübt wird, ohne dass diese jedoch übergroß ist und etwa eine Beschädigung der Bespannung 12 zu befürchten steht oder eine Wölbung des Lichtgestalters 10 außerhalb seiner gewünschten ebenen Form erfolgt. Um eine solche Wölbung zu verhindern, ist auch das oben bereits erwähnte, in der schematischen Darstellung der Figur nicht erkennbare Übermaß der Breite A der Bespannung 12 gegenüber dem Durchmesser D des entspannten Rahmens 11 vorgesehen. In den Bereich mit diesem Übermaß weicht der auch bei voller Entfaltung des Lichtgestalters 10 nach wie vor gegenüber seiner unbespannten Grundform verformte und unter Spannung stehende Rahmen 1 2 aus, so dass er bei voll entfaltetem Lichtgestalter 10 auch dort straffend sitzt. Entsprechend diesen Vorgaben und Randbedingungen (um eine Wölbung nach Art einer Sattelfläche zu verhindern und dennoch eine ausreichende Straffung zu erhalten) werden die Werte für das Untermaße in Richtung der Breite B bzw. das Übermaß in Richtung der Breite A der Bespannung 12 im Verhältnis zu dem Durchmesser D des Rahmens 11 gewählt. Um eine Wölbung zu verhindern kann der Rahmen 11 zudem auch aus einem Federstahl oder einem anderen Material mit rechteckigem Querschnitt gebildet sein, mit seiner größeren Erstreckung quer zur Zeichenebene.

Durch die zusätzliche Versteifung, die der Rahmen im Bereich der Handgriffe 13 erfährt, wird der straffende Effekt des auch bei vollständig ausgefaltetem Lichtgestalters 10 weiter nach außen drängenden Rahmens 11 noch unterstützt.

Je nach Ausgestaltung der Bespannung 12, die eine reflektierende, eine Licht streuende oder eine Licht abschwächende Bespannung sein kann, kann der Lichtgestalter 10 als Reflektor, Diffusor oder aber Abschwächer Verwendung finden.

Durch die Federelastizität des Materials des Rahmens 11 und dessen Verformbarkeit kann der Rahmen 11 und damit der Lichtgestalter 10 insgesamt zusammengefaltet und damit für den Transport oder die Lagerung verkleinert werden. Dies geschieht vollständig analog zu der in der eingangs bereits erwähnten GB 1562282 stehenden Beschreibung, so dass diesbezüglich auf diese Beschreibung Bezug genommen werden kann. Es wird also z.B. durch Halten eines der Handgriffe 13 und Verdrehen des anderen Handgriffes um 180° eine Art Doppelschlaufe in Form einer "8" gebildet, die dann wiederum durch Falten entlang des Knotens mit zwei kleinen Schlaufen aufeinander gelegt und so verkleinert verstaut werden kann.

Grundsätzlich kann der erfindungsgemäße Lichtgestalter in beliebigen Dimensionen gestaltet werden, wobei jedoch für einen portablen Einsatz typische Abmessungen z.B. der Breite B im Bereich zwischen 30 cm und 1,5 m liegen werden.

Die hier gezeigte Form von entspanntem Rahmen als Kreis und Bespannung als Oval stellt nicht die einzig mögliche Form dar, um die Erfindung zu realisieren, wenn diese Form auch derzeit als Ausführungsform bevorzugt wird. Grundsätzlich kommt es allein darauf an, dass die Bespannung verglichen mit dem Rahmen in einer vollständig ausgefalteten Form in einer Richtung ein deutliches Untermaß aufweist, welches in der wie oben beschriebenen Art und Weise zu einer dauerhaften und definierten Kraftausübung des im aufgefalteten Zustand des Lichtgestalters nach wie vor nach außen drängenden Rahmens und damit einer Straffung der Bespannung führt.

### Bezugszeichenliste

- 10: Lichtgestalter
- 11: Rahmen
- 12: Bespannung
- 13: Handgriff
- 14: Rand
- 15: Ausbuchtung

- A: Breite
- B: Breite
- D: Durchmesser

## Patentansprüche

1. Transportabler faltbarer Lichtgestalter für photographische und filmische Aufnahmen mit einem geschlossenen Rahmen (11) aus einem elastischen, verformbaren Material und einer in dem Rahmen (11) angeordneten, von diesem gehaltenen zur Lichtbeeinflussung ausgebildeten Bespannung (12), die bei vollständig ausgebreitetem Lichtgestalter (10) durch die Materialspannung des Materials des Rahmens (11) in der Ebene des Rahmens (11) straff gehalten wird und in einer Richtung (B) kleiner bemessen ist als die Breite (D) des unbespannten Rahmens (11) in derselben Richtung (B) in vollständig ausgebreiteter Stellung, **dadurch gekennzeichnet, dass** der unbespannte Rahmen (11) in vollständig ausgebreiteter Stellung eine Kreisform aufweist, die Bespannung (12) von einer Kreisform abweichend, vorzugsweise oval oder ellipsenförmig, gebildet ist mit einer den Durchmesser (D) der Kreisform des vollständig ausgebreiteten, unbespannten Rahmens (11) unterschreitenden Breite (B) in einer kürzeren Erstreckungsrichtung und dass an dem Rahmen (11) wenigstens ein Handgriff (13), vorzugsweise zwei Handgriffe (13) angeordnet ist/sind.

2. Lichtgestalter nach Anspruch 1, **dadurch gekennzeichnet, dass** der wenigstens eine Handgriff (13) in einem Abschnitt des Rahmens (11) entfernt von der Richtung (B), entlang der die Bespannung (12) kleiner bemessen ist als die Breite (D) des unbespannten Rahmens (11) in vollständig ausgebreiteter Stellung, angeordnet ist.

3. Lichtgestalter nach einem der vorhergehenden Ansprüche, **dadurch gekennzeichnet, dass** die Bespannung in einer quer zu der Richtung (B) liegenden Erstreckungsrichtung (A) größer bemessen ist als die in dieser Erstreckungsrichtung (A) liegende Breite (D) des unbespannten, vollständig ausgebreiteten Rahmens (11) in vollständig ausgebreiteter Stellung.

4. Lichtgestalter nach einem der vorhergehenden Ansprüche, **dadurch gekennzeichnet, dass** der Rahmen (11) aus Federstahl gebildet ist.

5. Lichtgestalter nach einem der vorhergehenden Ansprüche, **dadurch gekennzeichnet, dass** die Bespannung (12) entlang ihres Umfangsrandes (14) Schlaufen oder Tunnel aufweist, durch die der Rahmen (11) zum Verbinden mit der Bespannung (12) geführt ist.

6. Lichtgestalter nach einem der vorhergehenden Ansprüche, **dadurch gekennzeichnet, dass** die Bespannung (12) aus einem Textil, vorzugsweise einem gewebten Textil gebildet ist.

7. Lichtgestalter nach einem der vorhergehenden Ansprüche, **dadurch gekennzeichnet, dass** die Bespannung (12) aus einem elastischen Material besteht.

8. Lichtgestalter nach einem der vorhergehenden Ansprüche, **dadurch gekennzeichnet, dass** die Bespannung (12) zum Reflektieren von Licht eingerichtet ist.

9. Lichtgestalter nach einem der Ansprüche 1 bis 7, **dadurch gekennzeichnet, dass** die Bespannung (12) zum Abschwächen und/oder Streuen von Licht eingerichtet ist.

## Claims

1. A portable and foldable light sculptor for photographic and film takes with a closed frame (11) made of an elastic, deformable material and of a web (12), arranged in said frame (11) and held by said frame for light modulation purposes, wherein said web is stretched on the plane of the frame (11) when the light sculptor (10) is fully deployed by the tension exerted on the material of the frame (11) and is reduced in size in a direction (B) relative to the width (D) of the non-stretched frame (11) in the same direction (B) in fully deployed position, **characterised in that** said non-stretched frame (11) is circular in shape when in fully deployed position, whereas the web (12) moves away from a circular shape and becomes preferably oval or elliptical, with a width (B) smaller than the diameter (D) of the circular shape of the non-stretched, fully deployed frame (11) over a shorter stretching direction and **in that** the frame (11) includes at least one handle (13), preferably two handles (13).

2. A light sculptor according to claim 1, **characterised in that** said at least one handle (13) is arranged in one section of the frame (11) away from the direction (B) along which the web (12) is smaller in size than the width (D) of the non-stretched frame (11) in fully deployed position.

3. A light sculptor according to any of the preceding claims, **characterised in that** the web, in a stretching direction (1) perpendicular to the direction (B) is greater in size than the width (D) in this stretching direction (1) of the non-stretched, fully deployed frame (11) in fully deployed position.

4. A light sculptor according to any of the preceding claims, **characterised in that** the frame (11) is made of spring steel.

5. A light sculptor according to any of the preceding claims, **characterised in that** the web (12) exhibits loops or tunnels along its peripheral edge (14) letting the frame (11) through for connection with the web (12).

6. A light sculptor according to any of the preceding claims, **characterised in that** the web (12) consists of textile, preferably woven textile.

7. A light sculptor according to any of the preceding claims, **characterised in that** the web (12) consists of an elastic material.

8. A light sculptor according to any of the preceding claims, **characterised in that** the web (12) is arranged for the reflection of light.

9. A light sculptor according to any of the claims 1 to 7, **characterised in that** the web (12) is arranged for dimming and/or dispersing light.

## Revendications

1. Sculpteur de lumière portable et pliant pour prises photographiques et cinématographiques avec cadre fermé (11) en matériau élastique déformable et d'une toile (12), disposée dans ledit cadre (11) et maintenu par ledit cadre pour moduler la lumière, ladite toile se voyant étirée sur le plan du cadre (11) lorsque le sculpteur de lumière (10) est complètement déployé par la tension exercée sur le matériau du cadre (11) et dont la taille est réduite dans une direction (B) par rapport à la largeur (D) du cadre non étiré (11) dans la même direction (B) en position entièrement déployée, **caractérisé en ce que** ledit cadre non étiré (11) est de forme circulaire en position entièrement déployée, lorsque la toile (12) abandonne une forme circulaire pour devenir de préférence ovale ou elliptique, d'une largeur (B) inférieure au diamètre (D) de la forme circulaire du cadre non étiré, entièrement déployé (11) sur une direction d'étirage plus courte et **en ce que** le cadre (11) comprend au moins une poignée (13), de préférence deux poignées (13).

2. Sculpteur de lumière selon la revendication 1, **caractérisé en ce que** ladite au moins une poignée (13) est disposée dans une partie du cadre (11) à l'opposé de la direction (B) selon laquelle la toile (12) est de taille inférieure à la largeur (D) du cadre non étiré (11) en position entièrement déployée.

3. Sculpteur de lumière selon l'une quelconque des revendications précédentes, **caractérisé en ce que** la toile, dans une direction d'étirage (1) perpendiculaire à la direction (B) est de taille supérieure à la largeur (D) dans cette direction d'étirage (1) du cadre (11) non étiré, en position entièrement déployée.

4. Sculpteur de lumière selon l'une quelconque des revendications précédentes, **caractérisé en ce que** le cadre (11) est en acier à ressorts.

5. Sculpteur de lumière selon l'une quelconque des revendications précédentes, **caractérisé en ce que** la toile (12) présente des boucles ou des tunnels le long de son bord périphérique (14) pour laisser passer le cadre (11) pour se connecter à la toile (12).

6. Sculpteur de lumière selon l'une quelconque des revendications précédentes, **caractérisé en ce que** la toile (12) se compose de textile, de préférence de textile tissé.

7. Sculpteur de lumière selon l'une quelconque des revendications précédentes, **caractérisé en ce que** la toile (12) se compose d'un matériau élastique.

8. Sculpteur de lumière selon l'une quelconque des revendications précédentes, **caractérisé en ce que** la toile (12) permet de réfléchir la lumière.

9. Sculpteur de lumière selon l'une quelconque des revendications 1 à 7, **caractérisé en ce que** la toile (12) permet de baisser et/ou de disperser la lumière.
